# EUROPEAN PATENT APPLICATION

(11) **EP 1 148 722 A1**
(43) Date of publication of application: **24.10.2001**
(21) Application number: 00974988.8
(22) Date of filing: 14.11.2000
(51) Int. Cl.: H04N 5/76

(54) **VIDEO SEARCHING METHOD AND VIDEO SEARCHING APPARATUS**

(30) Priority: 15.11.1999 JP 32443799
(71) Applicant: MATSUSHITA ELECTRIC INDUSTRIAL CO., LTD., Kadoma-shi, Osaka 571-8501 (JP)
(72) Inventor: YASHIO, Hitoshi, Sumida-ku, Tokyo 130-0025 (JP); TAMURA, Mituo, Tokyo 125-0041 (JP); ASAI, Kayoko, Tokyo 125-0054 (JP); SATO, Makoto, Funabashi-shi Chiba 273-0005 (JP); HAYAKAWA, Yoshihiro, Yokohama-shi Kanagawa 241-0823 (JP)
(74) Representative: Grünecker, Kinkeldey, Stockmair & Schwanhäusser Anwaltssozietät
(86) International application number: JP0008027
(87) International publication number: WO0137560

(57) **Abstract**

The invention provides video retrieval apparatus that allows efficient retrieval of moving images. Video retrieval apparatus for retrieving a target scene from a plurality of pictures comprises moving picture list display means for displaying a list of a plurality of pictures and time-division image displaymeans for displaying the time-division moving image of a picture selected from among the listed pictures. The apparatus displays a list of a plurality of pictures and displays the time-division moving image of a picture selected from among the listed pictures. The video retrieval apparatus selects and displays retrieval pictures as well as analyzes the pictures and displays the pictures in processed form in order to efficiently find a target scene, thereby allowing efficient retrieval of pictures.

## Description

### <Technical Field>

The present invention relates a retrieval method for retrieving a desired picture from among a great number of recorded pictures and corresponding video retrieval apparatus, and in particular to a video retrieval method that enables efficient retrieval of pictures and apparatus for implementing the method.

### <Background of the Invention>

A broadcast station stores a great number of video materials. Creation of a program requires means for efficiently retrieve materials to be used from among these video materials.

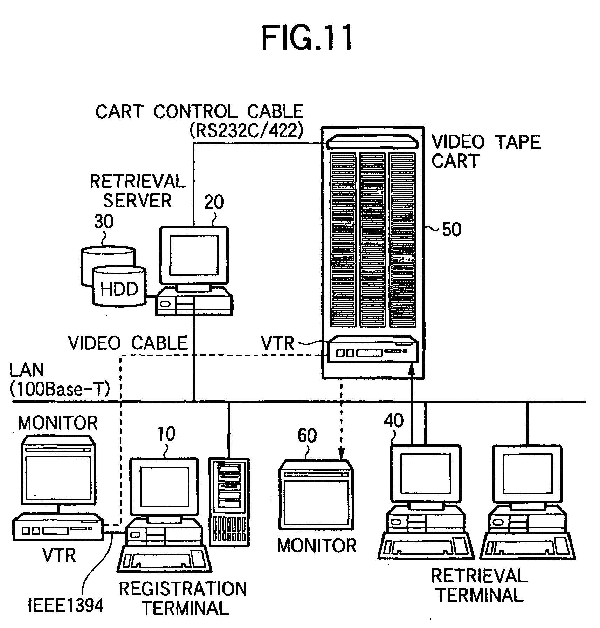

A related art video retrieval system comprises, as shown in Fig. 11, a registration terminal 10 for registering video materials from a VTR, a tape cart 50 for storing registered video materials, a hard disk 30 for storing thumbnail moving images reduced for retrieval, a video server 20 for performing video retrieval, a retrieval terminal 40 that a retriever operates, a monitor 60 for displaying the picture on a retrieved tape.

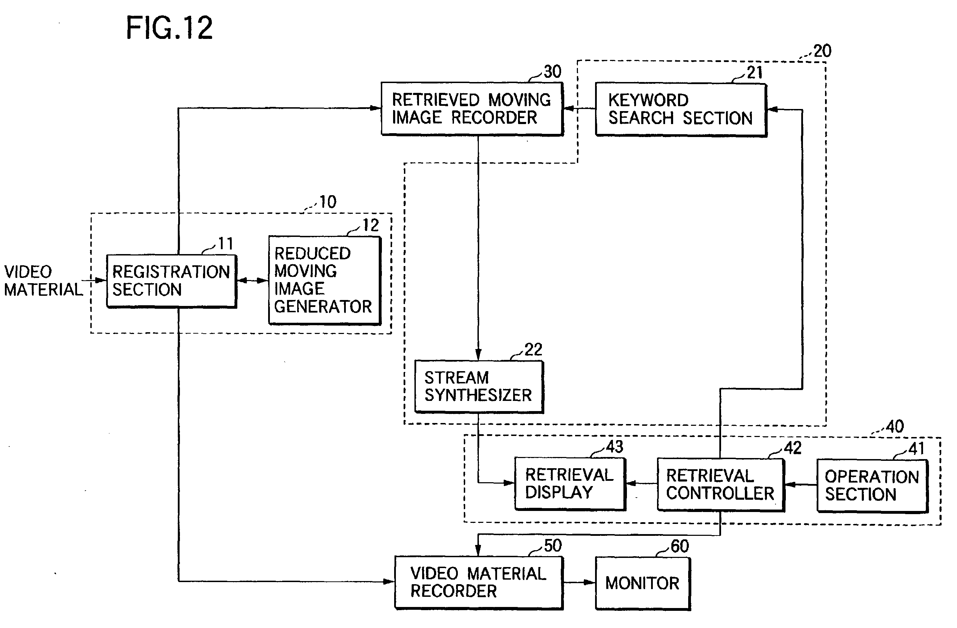

Fig. 12 shows the system in functional blocks. The registration terminal 10 comprises a registration section 11 for performing registration of video materials and a reduced moving image generator 12 for generating thumbnail moving images of video materials. The retrieval terminal 40 comprises an operation section 41 for the retriever to enter a keyword, a retrieval display 43 for displaying a moving image list for retrieval, and a retrieval controller 42 for instructing retrieval based on an input from the operation section 41. The video server 20 comprises a keyword search section 21 for retrieving moving thumbnail images via keywords and a stream synthesizer 22 for synthesizing stream data from retrieved thumbnail images. The hard disk that stores thumbnail moving images is shown as a retrieved moving image recorder 30 and the tape cart that stores video materials as a video material recorder 50. A hard disk or a magneto-optical disk may be used instead of a tape cart.

The registration section 11 of the system generates thumbnail moving images used for display of a moving image list via the reduced moving image generator 12 when it stores video materials recorded in gathering materials in the video material recorder 50. The registration section 11 then stores the thumbnail moving images in relation to video materials together with keyword search data in the retrieved moving image recorder 30. The keyword search data may be a title, date of broadcast, genre and/or a cast.

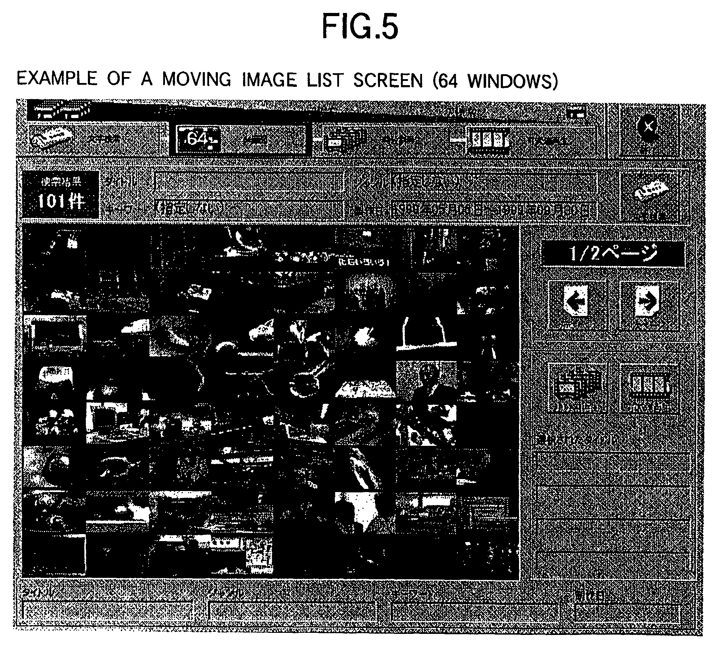

When the retriever enters a keyword from the operation section 41, the keyword search section 21 retrieves all the thumbnail moving images with the corresponding keyword attached from the retrieved moving image recorder 30. A plurality of moving images thus retrieved are synthesized into moving image list stream data via the stream synthesizer 22 and sent to the retrieval display 43 and displayed on the retrieval display. The display screen is shown in Fig. 5.

The retriever can directly check video materials as results of retrieval. When the retriever selects video materials from a plurality of moving images displayed, a request to display the video materials is sent from the retrieval controller 42 to the video material recorder 50 and the specified video materials are regenerated on a monitor.

It is, however, substantially cumbersome to correctlypick up target video materials from among a great number of reduced moving images. While 64 reduced moving images are displayed on the screen in Fig. 5, more than 64 moving images are sometimes retrieved during keyword search. In this case, similar screens are displayed one after another via the operation of selection of next page on the screen. The more the number of moving images is, the more difficult it is to pick up target video materials and thus more errors occurs.

An error in the selection of video materials is not noticed until the video materials are regenerated on the monitor. When the retriever has noticed such an error, he/she must retrieve thumbnail moving images again, thus substantially delaying the video material selection work.

The invention solves such problems and aims at providing a video retrieval method that enables efficient retrieval of moving images and apparatus for implementing the method.

### <Disclosure of the Invention>

Video retrieval apparatus according to the invention for retrieving a target scene from a plurality of images comprises list moving images display means for displaying a list of a plurality of pictures and a time-division image display means for displaying pictures selected from among listed pictures.

A video retrieval method according to the invention lists a plurality of pictures and displays time-division moving pictures of the pictures selected from among the plurality of pictures.

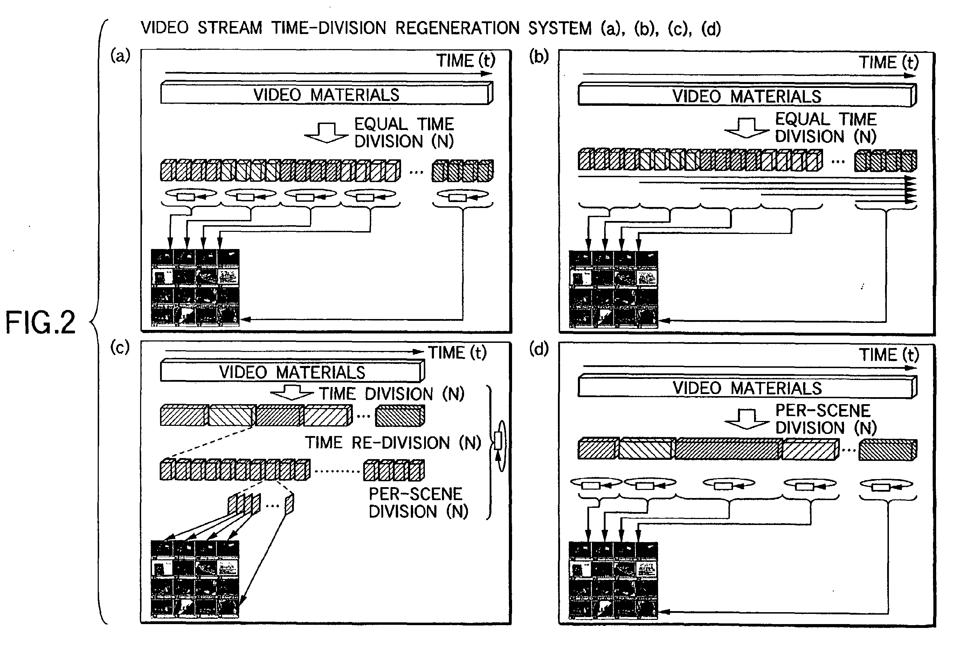

More particularly, when an arbitrary image is selected from a screen where a plurality of encoded pictures are listed,
(1) As shown in Fig. 2(a),
   the selected encoded picture undergoes time-division processing (normally uniformly divided in certain intervals on the tome axis) and each of the divided pictures is regenerated repeatedly from the beginning to the end. In the meantime, divided pictures are regenerated via synthesis regeneration or image synthesis regeneration to synthesize the divided pictures on a single screen, or
(2) As shown in Fig. 2(b),
   several different times are selected on the time axis of the selected encoded picture (normally every certain interval on the time axis) and each picture having the different times as regeneration start times are regenerated from the beginning on a single screen via image synthesis regeneration (called regeneration start time shift regeneration), or
(3) As shown in Fig. 2(d),
   switching points of scenes in the selected encoded picture are detected and division of the encoded picture is made based on the detected scene switching points. Each of the divided pictures is regenerated repeatedly from the beginning to the end via image synthesis regeneration (called cut point switching regeneration), or
(4) As shown in Fig. 2(c),
   pictures selected from groups of images that have undergone image synthesis regeneration under each of (1) through (3) are divided again and simultaneously regenerated and displayed in divided pictures on a single screen (a sequence from respective picture division to image synthesis regeneration is repeated), or
(5) In case a plurality of encoded pictures are selected under each of (1) through (4), those divided moving pictures are simultaneously regenerated and displayed in divided pictures on a single screen.

According to the invention, pictures for retrieval are not only selected and displayed but the pictures are analyzed and processed before displayed so that target scenes may be efficiently found. As a result, it is possible to efficiently retrieve pictures.

### <Brief Description of the Drawings>

Fig. 1 is a block diagram showing the configuration of video retrieval apparatus according to a first embodiment.
Fig. 2 shows the state of time-division regeneration of a video stream.
Fig. 3 is a block diagram showing the configuration of video retrieval apparatus according to a second embodiment.
Fig. 4 is a block diagram showing the configuration of video retrieval apparatus according to a third embodiment.
Fig. 5 shows an example of displaying a moving image list (64 windows).
Fig. 6 shows an example of displaying a digest moving image of a moving image list (64 windows).
Fig. 7 shows an example of a screen displaying a time-division image.
Fig. 8 shows an example of a screen displaying multiple time-division images.
Fig. 9 shows an application example of the third embodiment.
Fig. 10 illustrates an operation screen for variable speed regeneration.
Fig. 11 shows a configuration of a related art video archive system.
Fig. 12 is a block diagram showing related art video retrieval apparatus.

In the figures, a numeral 10 represents a registration terminal, 11 a registration section 12 a reduced moving image generator, 20 a video server, 21 a keyword search section, 22 a stream synthesizer, 23 a resolution converter, 24 a variable speed regenerator, 25 a time-division moving image analyzer, 26 a cut point time-division moving image analyzer, 27 a time-division multiple moving image analyzer, 30 a retrieved moving image recorder, 31 a moving image storage section, 40 a retrieval terminal, 41 an operation section, 42 a retrieval controller, 43 a retrieval display, 50 a video material recorder, and 60 a monitor.

### <Best Mode for Carrying Out the Invention>

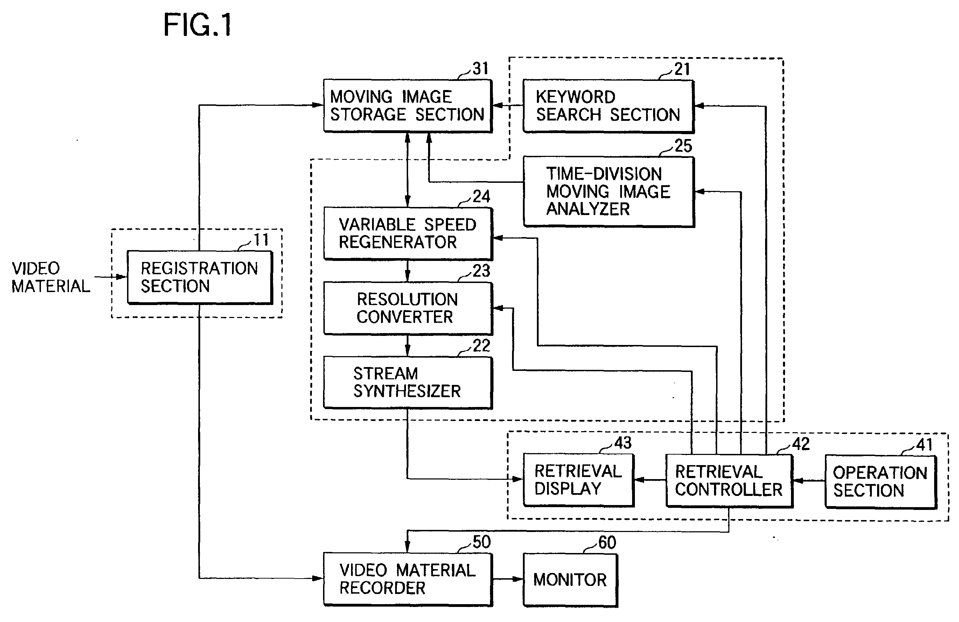

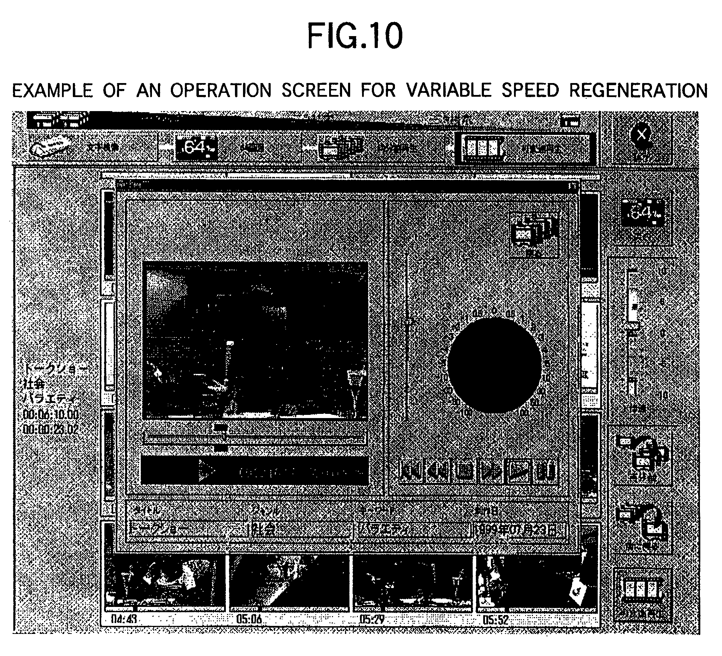

Embodiments of the invention will be described referring to Figs. 1 through 10. Note that the invention is not restricted to these embodiments but may be implemented in a variety of aspects that fall within the scope and spirit of the invention. Terms used herein includes a picture/movingpicture and an image/moving image. In the case of MPEG for example, a picture/moving picture refers to a video stream that is a group of frames (separate moving images) while an image/moving image refers to each of the frames that constitutes a video stream.

### (First embodiment)

As shown in Fig. 1, video retrieval apparatus according to the first embodiment comprises a registration section 11 for performing registration of video materials, a moving image storage section 31 for storing registered moving images onto a disk, a video material recorder 50 for storing registered video materials onto tapes, a monitor 60 for displaying tape images, an operation section 41 for the retriever to operate, a retrieval display 43 for displaying retrieved images, a retrieval controller 42 for instructing retrieval of pictures based on an input from the operation section 41, a keyword search section 21 for retrieving thumbnail images via keywords, a time-division moving image analyzer 25 for dividing a video stream in the direction of a time axis, a variable speed regenerator 24 for reading storedmoving image data at a variable speed, a resolution converter 23 for converting the resolution of moving image data to generate thumbnail moving images, and a stream synthesizer 22 for synthesizing thumbnail images generated via resolution conversion to generate stream data.

In this apparatus, the registration section 11 sends the picture of a video material to the moving image storage section 31 when it stores the video material in the videomaterial recorder 50. The moving image storage section 31 analyzes the scenes of this picture and appends a tag at the beginning of each scenes and encodes the scenes via compression encoding then stores the resulting data onto a disk together with keyword search data. The pictures are not reduced to thumbnail images but stored in the moving image storage section 31.

When the retriever enters a keyword from the operation section 41, the retrieval controller 42 instructs the keyword search section 21 to perform keyword search. The variable speed regenerator 24 reads moving images retrieved by the keyword search section 21 from the moving image storage section.

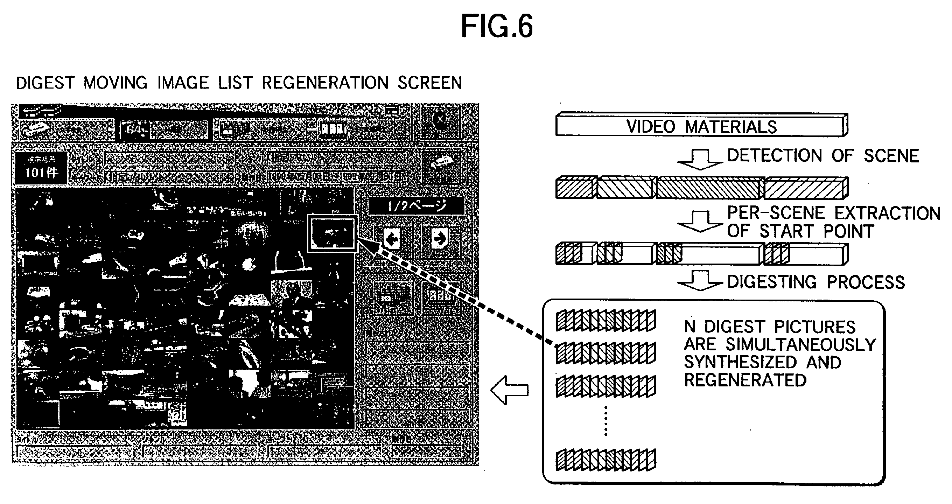

In this practice, the variable speed regenerator 24 reads a predetermined number of frames from the beginning of each scene of respective moving image streams retrieved and outputs a digest moving image stream, as shown in Fig. 6.

The resolution converter converts the resolution of the digest moving image output from the variable speed regenerator 24 and outputs the image in thumbnail image data. The stream synthesizer 22 synthesizes the digest moving images of a plurality of retrieved pictures into moving image list stream data and outputs the resulting data to the retrieval display 43.

Thus, a 64-window digest moving image is displayed on the retrieval display 43, as shown in Fig. 5. In this practice, when the retriever selects N windows, N being a natural number equal to or greater than 2, on the operation section 41, the retrieval controller 42 instructs the resolution converter 23 to display the thumbnail moving images corresponding to the specified number of windows.

When the number of the pictures retrieved in keyword search exceeds 64 or specified number of windows, selecting the next page displays the remaining windows.

Displaying a moving image list via digest images allows regeneration in a short time.

When the retriever selects a picture from this moving image list, the retrieval controller 42 instructs the time-division moving image analyzer 25 to regenerate the time-division moving image of the picture.

As shown in Fig. 2(a), the time-division moving image analyzer 25 divides its video stream in N equal parts in the direction of the time axis. The variable speed regenerator 24 sequentially reads the image data in the direction of the time axis from each of the positions divided in N equal parts by the time-division moving image analyzer 25. The data read by the variable speed regenerator 24 is reduced to thumbnail images by the resolution converter 23, synthesized by the stream synthesizer 22 and displayed on the retrieval display 43.

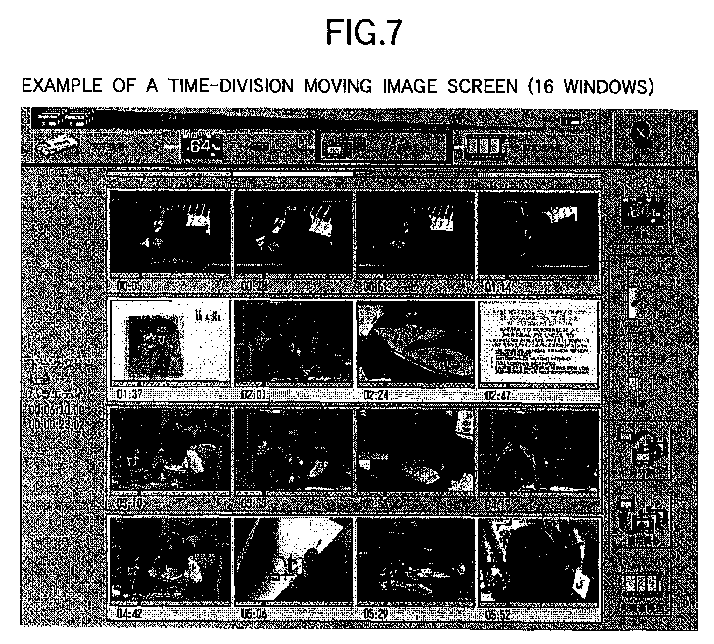

Fig. 7 shows an example of the time-division moving image where data regeneration simultaneously starts from different positions on the time axis of a single image and the plurality of images are displayed while displayed on a single screen. As shown in Fig. 2(a), when data regeneration is complete as far as the end point of each equally divided regeneration section, data regeneration is repeated from the beginning of each regeneration section.

By employing such a regeneration method, the retriever can watch the contents of a picture in the time one Nth of the regeneration time assumed when a single picture is successively regenerated from the beginning to the end of a single picture, thus finding a desired picture position in a short time.

When the retrieve selects another regeneration section from the time-division moving images, the time-division moving image analyzer and the variable speed regenerator 24 operates the same way and as a result the regeneration section is further divided in N equal parts.

In this way, by repeating division on the time axis and narrowing the regeneration section, it is possible to quickly find the target scene.

Re-dividing the regeneration section to the ultimate level renders the regeneration section a single frame as shown in Fig. 2(c), which is the same as a still picture.

As shown in Fig. 2(b), it is possible to shift the data regeneration start point equidistantly on the time axis, endlessly regenerate data from each regeneration start point, and display the images arranged on a single screen. In this case, regenerating each image a normal regeneration speed allows future image portions from other images. This provides the same effects as high-speed regeneration.

The retriever can operate the operation section 41 to vary the data read speed from the moving image storage section 31 via the variable speed regenerator 24.

The retriever, when wishing to perform more detailed video regeneration, displays the screen used to operate the variable speed regenerator 24 on the retrieval display 43. When the retriever varies the regeneration speed on this screen, the corresponding signal is sent from the retrieval controller 42 to the variable speed regenerator 24 thus varying the regeneration speed.

In this way, according to this video retrieval apparatus, it is possible to assure retrieval of the target scene via display of a digest moving image list, time-division moving image regeneration, and narrowing of variable speed regeneration using three-stage browsing preview.

It is also possible to retrieve a target scene in a short time by digesting moving images to be listed and performing time-division moving image regeneration.

Configuration of the video retrieval apparatus and the video retrieval method can be modified as required depending on the situation.

In case the number of stored pictures is small, moving image listing may be directly executed without performing keyword search.

A non-digested moving image may be displayed in displaying a moving image list.

While this embodiment assumes a configuration where moving images for retrieval are stored in the moving image storage section 31 without being reduced and turned into thumbnail images in real time before retrieval of moving images, moving images for retrieval that have been reduced to thumbnail images may be stored and time-division moving image regeneration and variable speed regeneration may be introduced before retrieval of images, as in related art apparatus.

### (Second embodiment)

Video retrieval apparatus according to the second embodiment performs time-division of a picture before displaying the picture by scene in time-division moving image regeneration.

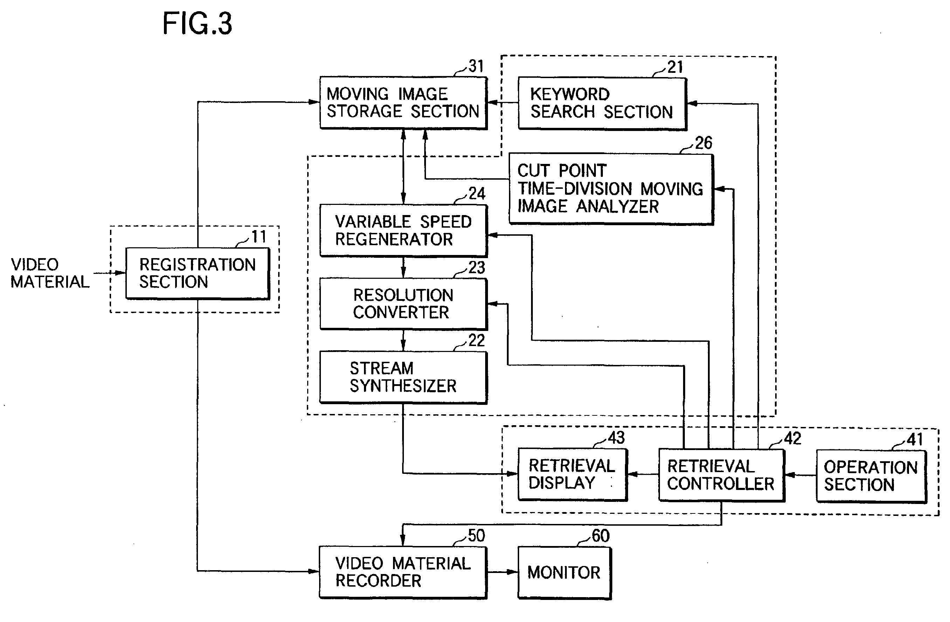

The apparatus comprises a cut point time-division moving image analyzer 26 for setting each start point of a scene to a regeneration start point as a cut point time-division moving image analyzer, as shown in Fig. 3. The other configuration is the same as the first embodiment in Fig. 1.

In this apparatus, when the retriever selects any of the pictures displayed in the moving image list and regeneration of the picture is instructed from the retrieval controller 42 to the cut point time-division moving image analyzer 26, the cut point time-division moving image analyzer 26 sets the position of a tag appended per scene of the video stream to a regeneration start point as shown in Fig. 2(d). The variable speed regenerator 24 sequentially reads image data in parallel in the direction of the time axis from each point set by the cut point time-division moving image analyzer 26. The data read by the variable speed regenerator 24 is reduced to thumbnail data by the resolution converter 23, synthesized by the stream synthesizer 22 and displayed on the retrieval display 43.

As shown in Fig. 2(d), when regeneration is complete up to the end point of the regeneration section per scene, regeneration is repeated beginning with the start point of each scene. Time length of each regeneration section differs from scene to scene. Regeneration of each scene is made in real time so that the number of repetitions of each scene is larger for a short scene and smaller for a long scene.

This video retrieval apparatus regenerates time-division moving images in parallel per scene contained in a video stream, so that the retriever can properly retrieve a target scene by watching the time-division image.

### (Third embodiment)

Video retrieval apparatus according to the third embodiment displays time-division moving images of a plurality of pictures on a single screen.

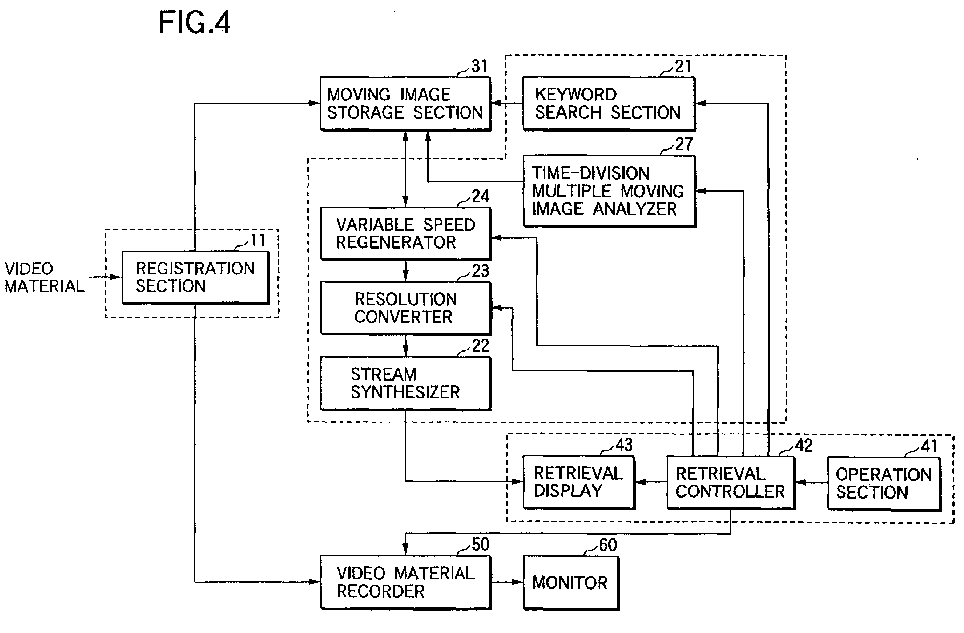

As shown in Fig. 4, the apparatus comprises a time-division multiple moving image analyzer 27 for dividing a plurality of video streams in equidistantly in the direction of the time axis to set the start point of time-division regeneration as a time-division moving image analyzer. The other configuration is the same as the first embodiment in Fig. 1.

In this apparatus, when the retriever selects a plurality of pictures from among the pictures displayed in the moving image list , the retrieval controller 42 instructs the time-division multiple moving image analyzer 27 to regenerate time-division moving images of these pictures.

The time-division multiple moving image analyzer 27 sets the positions of the specified plurality of video streams per certain time to regeneration start points. The variable speed regenerator 24 sequentially reads image data in parallel in the direction of the time axis from each point set by the time-division multiple moving image analyzer 27. The data read by the variable speed regenerator 24 is reduced to thumbnail images by the resolution converter 23, synthesized by the stream synthesizer 22 and displayed on the retrieval display 43.

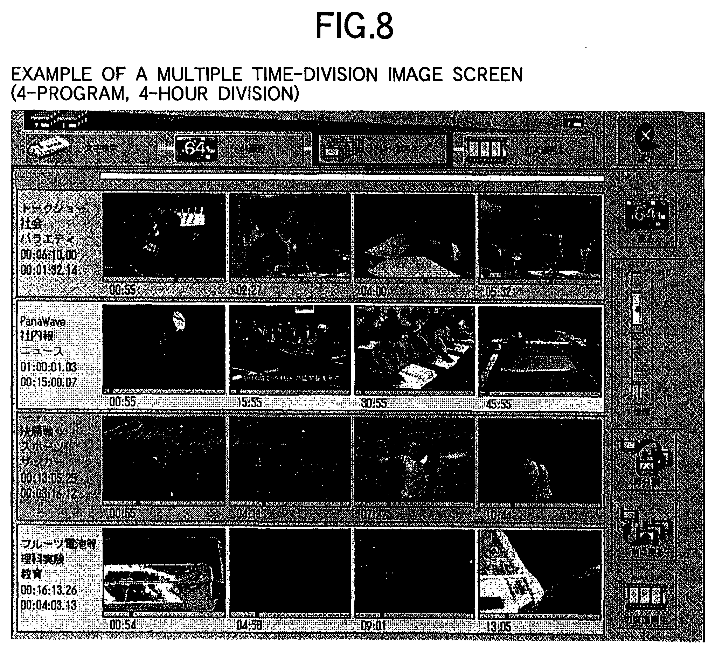

Fig. 8 illustrates the screen of the retrieval display 43 for displaying the time-division images of a plurality of pictures. Pictures differ from column to column and each picture is displayed in four time-division images.

The retriever can watch a plurality of pictures in comparison with each other from the plurality of time-division images. The retriever thus can determine which picture is the most proper as a picture used for example in the predetermined time frame of a program.

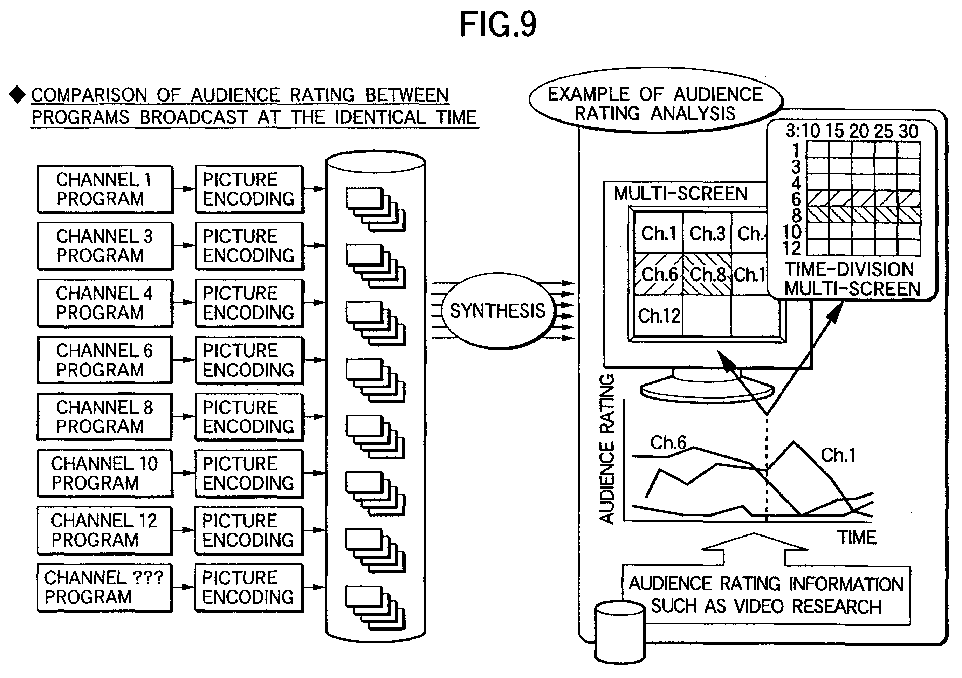

As an application example of the plurality of time-division images, it is possible to, as shown in Fig. 9, display pictures from a plurality of broadcast stations and display the time-based transition of the audience rating of each broadcasting station in a window so that analysis on what scenes correspond to high audience ratings.

As understood from the foregoing description, the video retrieval apparatus according to the invention allows retrieval of pictures by using narrowing of pictures via display of a moving image list, time-division moving image regeneration and three-stage video display of variable speed regeneration. Thus the retriever can properly find a target scene. In the time-division moving image regeneration, it is possible to display the contents of a single video stream in a short time thus allowing efficient retrieval of scenes.

In the multiple time-division moving image regeneration, it is possible to compare the time-based transition of aplurality of pictures.

The video retrieval method according to the invention selects and displays retrieval pictures as well as analyzes the pictures and displays the pictures in processed form in order to efficiently find a target scene, thereby allowing efficient retrieval of pictures.

### <Industrial Applicability>

While the video retrieval apparatus of the invention has been described in terms of creation of a program in each embodiment, the invention may be used for other video retrieval applications. For example, it is possible to use the invention for retrieval of display pictures stored in a museum, retrieval of a large number of video pictures recorded at homes and pictures shot using a video camera, or detection of a target scene among the pictures from each monitoring camera installed in a monitoring system.

## Claims

1. Video retrieval apparatus comprising:
image list synthesis-display means for displaying a list of a plurality of stored encoded pictures in synthesized form on a single screen;
picture selection means for selecting an arbitrary image from a listed image group in order to select the encoded picture containing said image; and
picture division-synthesis-display means for dividing the selected encoded picture on a time axis and repeatedly synthesizing and displaying each divided picture from the start to the end on a single screen in order to perform simultaneous division and regeneration of the encoded picture.

2. Video retrieval apparatus comprising:
image list synthesis-display means for displaying a list of a plurality of stored encoded pictures in synthesized form on a single screen;
picture selection means for selecting an arbitrary image from a listed image group in order to select the encoded picture containing said image; and
picture division-synthesis-display means for selecting several times from the time axis of the selected encoded picture and synthesizing and regenerating respective pictures having said several times as regeneration start times from the start on a single screen in order to perform simultaneous division and regeneration of the encoded picture.

3. Video retrieval apparatus comprising:
image list synthesis-display means for displaying a list of a plurality of stored encoded pictures in synthesized form on a single screen;
picture selection means for selecting an arbitrary image from a listed image group in order to select the encoded picture containing said image; and
picture division-synthesis-display means for detecting the scene switching points of the selected encoded picture and dividing the encoded picture based on the detected scene switching points and repeatedly synthesizing and displaying each divided picture from the start to the end on a single screen in order to perform simultaneous division and regeneration of encoded pictures.

4. Video retrieval apparatus according to any of the preceding claims, wherein the picture divisionsynthesisdisplay means further divides the pictures selected from a picture group displayed in synthesized form and performs simultaneous division and regeneration of the resulting pictures on a single screen.

5. Video retrieval apparatus according to any of the preceding claims, wherein the picture divisionsynthesisdisplay means performs simultaneous division and regeneration of a plurality of divided encoded pictures on a single screen, said plurality of divided encoded pictures selected via the video selection means.
